# EUROPEAN PATENT APPLICATION

(11) **EP 4 353 557 A1**
(43) Date of publication of application: **17.04.2024**
(21) Application number: 22819011.2
(22) Date of filing: 13.06.2022
(51) Int. Cl.: B60W 40/02, B60W 20/12, B60P 3/20, G01C 21/26, G05D 23/00, G08G 1/0967

(54) **SYSTEM AND METHOD FOR MANAGING ENERGY IN VEHICLES PROVIDED WITH A CONTROLLED-TEMPERATURE ENVIRONMENT**

(30) Priority: 11.06.2021 BR 102021011440
(71) Applicant: Instituto Hercílio Randon, 95181899 Farroupilha (BR)
(72) Inventor: BOARETTO, Joel, 95032-180 Caxias do Sul (BR); MOLON, Maicon, 95032-759 Caxias do Sul (BR); PASTRE, Guilherme Garbossa, 95084-430 Caxias do Su (BR)
(74) Representative: Grünecker Patent- und Rechtsanwälte PartG mbB
(86) International application number: PCT/BR2022/050217
(87) International publication number: WO 2022/256901

(57) **Abstract**

The present invention describes a system and method of power management in vehicles provided with a temperature-controlled environment. Specifically, the present invention describes a power management system in a vehicle provided with a temperature-controlled environment comprising a controller connected to a power supply, wherein the vehicle and the temperature-controlled environment are partially or completely powered by the power supply, so that the controller composes an operation model based on georeferencing data, and defines the amount of charge that the power supply provides individually to the vehicle and the temperature-controlled environment along each section of a route traveled in order to maximize power efficiency in the transport of temperature-controlled cargo. The present invention is located in the fields of mechanical and electronic engineering, focused on the area of power efficiency in automobile systems.

## Description

### Field of the Invention

The present invention describes a system and method of power management in vehicles that are provided with a temperature-controlled environment. More specifically, the present invention describes a power management system in a vehicle provided with a temperature-controlled environment comprising a controller connected to one or multiple power sources, wherein the vehicle and the temperature-controlled environment are partially or completely powered by the power source(s), so that the controller composes an operation model based on georeferencing data, and defines the amount of charge that the power source(s) provides individually to the vehicle and the temperature-controlled environment along each section of a route traveled, in order to maximize power efficiency in the transport of temperature-controlled cargo. The present invention is located in the fields of mechanical and electronic engineering, focused on the area of power efficiency in automobile systems.

### Background of the Invention

In view of the imminent shortage of fossil fuels in the coming years, the search for power efficiency in the automotive sector is increasingly present and associated with the reduction of fossil fuel consumption or its complete disuse. In this sense, the road transport sector, whether cargo or passenger transport, is the sector that has the greatest demand for fossil fuels, so that a reduction in the consumption of fossil fuels in this transport sector results in benefits for the transporter, reducing its operating cost, and also in environmental benefits, with the reduction of the emission of polluting gases and gases that intensify the planet's greenhouse effect.

In this sense, the demand for fossil fuel in road transport is related to its use in diesel engines of Cargo Vehicle Combinations (CVC), for example, and also related to its use in CVC temperature control systems, as in air conditioning systems, refrigerated cargo boxes, etc. In this way, the refrigeration device for refrigerated cargo boxes, such as refrigerated semi-trailers, for example, is a large consumer of diesel, requiring it to operate full time to maintain the temperature of the refrigerated cargo, and failures cannot occur during operation under penalty of losing the transported refrigerated cargo.

Therefore, refrigerated CVCs, such as refrigerated trucks or refrigerated road implements coupled to tractor trucks, have a high demand for fossil fuels, since said fuel is used both to move the CVC and to control the box temperature of the refrigerated cargo, and can be used for refrigeration or heating of the cargo box. Furthermore, refrigerated road implements have an independent and exclusive power supply to operate the cargo box temperature control system, which uses fossil fuel to power the compressor to cool or heat the cargo box. Furthermore, following the example of document US2008174174, the load boxes of these implements have an electric power reuse system, where a power source reuses thermal energy or kinetic energy and transforms it into auxiliary electric power, to power the temperature control system of the refrigerated cargo box.

In this sense, some of these systems has unified solutions, wherein the electric power reuse system is used both to electrically supply the refrigerated cargo box, and to assist in the traction of the towing vehicle, where in these systems the regenerated kinetic energy is stored in batteries and subsequently used as auxiliary electric power to drive the vehicle in moments of demand, such as in situations of incline or greater demand for torque, and is also used to power refrigerated cargo box temperature control systems, for example, as is the case with WO2020107086A1 authored by the Applicant herself.

Therefore, for the power regeneration system to provide auxiliary torque in demand situations and regenerate braking power in deceleration situations, the power regeneration systems are operated based on several collected parameters, such as parameters of the battery status, temperature of the CVC and/or environment, speed, location, etc., obtained from sensors installed in the CVC and in the regeneration system, so that these parameters provided by the sensors help the system to improve the power efficiency of the CVC.

However, in these previous solutions, there is a difficulty in managing the power that is generated by the CVC regeneration systems, since many of the current systems fail to propose a distribution of the power generated in an adequate way to the real demand of the route that the CVC system needs. This inadequate distribution of power causes the efficiency of the system to decrease and, consequently, the consumption of fossil fuel is not the most suitable for the conditions to which the CVC is subjected, resulting in savings below what is desired.

In the search for the state of the art in scientific and patent literature, the following documents were found that deal with the matter:

US2008174174 discloses a braking and propulsion regeneration system for truck trailers comprising a gearbox coupled to a shaft of the trailer, a generator coupled to the gearbox, a power storage system that stores and supplies power, and a controller that makes the shaft drives the generator through the gearbox, provides power to the power storage system during braking and assists in accelerating the trailer through the generator that uses the power stored in the power storage system to move the shaft gearbox. However, US2008174174, in addition to not allowing the integration of more than one power source, does not disclose a georeferencing system communicating with a controller, where said georeferencing system collects in real time and/or previously obtains latitude data, longitude, altitude and future weather conditions of the route, and provides this data to the controller, whereby the controller defines the amount of charge to be supplied to a vehicle and a cargo box based on said latitude, longitude, altitude data and future weather conditions of the route.

US2011094807 discloses an electric drive system comprising a set of gears coupled to an electric shaft, an electric motor coupled to the gear set, and a power storage system connected to the electric motor that converts and stores braking power and supplies the power electricity stored to the electric motor. However, US2011094807 does not disclose a georeferencing system communicating with a controller, where the georeferencing system collects real-time and/or pre-obtains data on latitude, longitude, altitude and future weather conditions of the route and provides this data to the controller, so that the controller defines the amount of charge to be supplied to a vehicle and a cargo box based on said latitude, longitude, altitude and future weather conditions of the route.

US9321352 discloses an integrated auxiliary power system for trucks and trailers comprising a plurality of solar panels coupled to the roof of the trailer, a battery for storing power generated by the panels, and a controller for controlling the flow of generated and stored power intended for refrigeration of the truck. However, US9321352 does not disclose a georeferencing system communicating with a controller, where the georeferencing system collects in real time and/or previously obtains latitude, longitude and altitude data, and future weather conditions of the route and provides this data to the controller, so that the controller defines the amount of charge to be supplied to a vehicle and a cargo box based on said latitude, longitude, altitude, and future weather conditions of the route.

US2018029436 discloses a hybrid electrical system for refrigerated vehicles controlled by a temperature control system comprising a power management system and a power storage module, wherein the control system operates in response to one or more parameters, including internal temperature parameters of the refrigerated compartment, ambient temperature, energy state of the power storage module and voltage of the vehicle's electrical system. However, US2018029436 only mentions the use of GPS to determine the current position of the vehicle, and not to make decisions regarding the amount of charge that the system can provide to the power sources. This solution does not allow you to focus on maximizing the power efficiency of sources.

EP3543046 discloses a charge and consumption management system for refrigerated trucks comprising a battery-connected controller that manages power from parameters obtained through GPS data and thermal sensor data, wherein the GPS data informs whether the truck refrigerated is close to an electrical battery recharging station. However, EP3543046 does not describe a georeferencing system that collects in real time and/or pre-obtains data on latitude, longitude, altitude, and future weather conditions of the route and provides this data to a controller, where the controller defines the amount of charge to be supplied to a vehicle and cargo box based on said latitude, longitude, altitude and future weather data. EP3543046 only describes the use of GPS data to identify battery recharging stations close to the vehicle and does not even make reference to the composition of the power distribution based on this GPS data.

WO2020068637 discloses a control system that manages the electrical supply to a refrigeration system of a refrigerated vehicle and trailer, wherein the refrigerated vehicle and trailer comprises a power storage device that stores electric power for a motor that drives the vehicle, wherein the control system comprises a controller configured to determine the state of charge of the power storage device, the level of charge in the vehicle supply, and determine an inclination angle of the vehicle by means of a sensor. However, WO2020068637 does not disclose a georeferencing system that collects data on latitude, longitude, altitude, and future weather conditions of the route in real time and/or previously obtains and provides this data to a controller, where the controller defines the amount of charge to be supplied to a vehicle and a cargo box based on said latitude, longitude, altitude, and future weather conditions of the route. WO2020068637 only describes the use of real-time vehicle inclination data, however it does not disclose the collection of altitude data to define the amount of charge to be supplied to the vehicle and trailer, so this solution is limited to the conditions of the vehicle, that is, it is not capable of predicting parameters and decision-making for the operation of the system, nor even of defining an initial setup for the operation of the vehicle system.

US2018273018A1 describes a system for power management and control of accessories in vehicles, being more specifically applied to passenger vehicles. In this solution, a system is proposed that collects static and dynamic vehicle data, such as GPS, maximum road speed, traffic data, etc. This document also mentions the use of climate data to consider the impact on the use of air conditioning. This solution, however, as it is a passenger vehicle, it does not concern about checking an initial setup relative to the route the vehicle will travel. Furthermore, climate data is only used to assess the need for greater/less use of the air conditioning system, and not to maximize the efficiency of the vehicle's power supplies.

Thus, from what can be inferred from the researched literature, no documents were found anticipating or suggesting the teachings of the present invention, so that the solution proposed herein has novelty and inventive step compared to the state of the art.

### Summary of the Invention

In this way, the present invention solves the problems of the prior art based on a power management system applied to vehicles provided with a controlled temperature environment, wherein the power management system comprises a controller connected with one or more power sources, wherein the vehicle and the temperature-controlled environment are partially or completely powered by the power supply, so that the controller composes an operating model, based on georeferencing data, such as altitude, latitude, longitude and conditions data future climate of the route, and defines the amount of charge that the power supply provides individually to the vehicle and the temperature-controlled environment along a route traveled, in order to maximize power efficiency in the transport of temperature-controlled cargos. The present invention also aims to maximize the efficiency of power supplies, given that sources may have greater or lesser efficiency based on changes in the scenario.

The system comprises maintaining the temperature necessary to preserve the transported cargo, using controllers, sensors and control algorithms that evaluate the performance needs of the refrigeration devices and the power sources available in the vehicle, with greater capacity and instantaneous availability, operating in order to cross-reference this data with the georeferencing and integration conditions of the elevation plans to be covered.

In a first object, the present invention shows a power management system in a vehicle provided with a temperature-controlled environment, wherein the vehicle and the temperature-controlled environment are powered by at least one power source, which comprises a controller connected at least one power source and communicating with a georeferencing system, which has at least latitude, longitude and altitude data for at least one route collected in real time and/or previously obtained, wherein the controller defines the amount of charge that the power supply individually delivers to the vehicle and temperature-controlled environment based on latitude, longitude, and altitude data. In addition, the vehicle power management system of the present invention comprises a weather monitoring system, which provides future weather condition data to the controller.

In a second object, the present invention shows a method of power management in a vehicle provided with a temperature-controlled environment, wherein the vehicle and the temperature-controlled environment are powered by at least one power source, the method comprising defining amount of charge that the power supply provides individually to the vehicle and the temperature-controlled environment, this step being carried out by a controller that is connected to the power supply and communicating with a georeferencing system, which has at least latitude, longitude and altitude data of at least one route collected in real time and/or previously obtained, wherein the controller defines the amount of load based on latitude, longitude and altitude data.

Furthermore, an object of the invention is a thermal load management system in a temperature-controlled vehicular environment, the vehicular environment being provided with a thermal system powered by at least one power source, which comprises a controller connected to the power source and communicating to a georeferencing system, which has at least latitude, longitude and altitude data for at least one route collected in real time and/or previously obtained, wherein the controller defines the amount of charge that the power supply provides to the vehicular environment controlled temperature based on latitude, longitude and altitude data.

An object of the invention is also a method of managing thermal load in a temperature-controlled vehicular environment, the vehicular environment being provided with a thermal system powered by at least one power source, the method comprising a step of defining the amount of charge that the power supply provides to the vehicular environment, this step being carried out by a controller that is connected to the power supply and communicates with a georeferencing system, which has at least latitude, longitude and altitude data from at least one route collected in real time and/or previously obtained, wherein the controller defines the amount of charge based on latitude, longitude and altitude data.

Furthermore, a further object of the invention is a cargo vehicle combination provided with a temperature-controlled environment, wherein the cargo vehicle combination comprises at least a first power supply and a second power supply and is equipped with a power management system, where the power management system comprises a controller (104) communicating with power sources, a georeferencing system (112) and a weather conditions monitoring system (113), wherein: the georeferencing (112) has at least latitude, longitude and altitude data for at least one route collected in real time and/or previously obtained; the weather monitoring system (113) provides historical, real-time or future weather condition data; the controller (104) defines the amount of electrical charge provided by the power sources through a correlation between latitude, longitude and altitude data versus weather conditions data of said route to be traveled by the cargo vehicle combination; and the controller (104) is provided with a previously defined initial conditions model, the initial conditions model being composed from a correlation between at least latitude, longitude and altitude data versus climatic conditions data, wherein the said model is optimized for said route to be traveled by the cargo vehicle combination.

These and other objects of the invention will be immediately appreciated by those skilled in the art and will be described in detail below.

### Brief Description of the Figures

The following figures are showed:
Fig. 1 shows an embodiment of the power management system in vehicles with a controlled temperature environment of the present invention, which illustrates a regenerative braking system (110) electrically supplying at least one rechargeable electric power storage device (101).
Fig. 2 shows an embodiment of the power management system in vehicles with a controlled temperature environment of the present invention, which illustrates a regenerative braking system (110) electrically supplying at least one rechargeable electric power storage device (101) and the inverter (116) converting the power from the regenerative braking system (110), and the controller (104) directing the supply of power stored in the batteries (101) to the refrigeration device (117).
Fig. 3 shows an embodiment of the power management system in vehicles with a controlled temperature environment of the present invention, which illustrates the rechargeable electric power storage device (101) being electrically powered by at least one photovoltaic panel system (100) and by at least one regenerative braking system (110).
Fig. 4 shows an embodiment of the power management system in vehicles with a controlled temperature environment of the present invention, which illustrates a system of photovoltaic panels (100) electrically supplying the rechargeable electric power storage device (101).
Fig. 5 shows an embodiment of the power management system in vehicles with a controlled temperature environment of the present invention, which illustrates the rechargeable electric power storage device (101) being electrically powered by an external power source (103).
Fig. 6 shows an embodiment of the power management system in vehicles with a controlled temperature environment of the present invention, which illustrates the rechargeable electric power storage device (101) being electrically powered by a system of photovoltaic panels (100) and by a regenerative braking system (110).
Fig. 7 shows an embodiment of the power management system in vehicles with a controlled temperature environment of the present invention, which illustrates the rechargeable electric power storage device (101) being electrically powered by a system of photovoltaic panels (100) and by an external power source (103).
Fig. 8 shows an embodiment of the power management system in vehicles with a controlled temperature environment of the present invention, which illustrates the rechargeable electric power storage device (101) being electrically powered by a regenerative braking system (110) and by an external power source (103).
Fig. 9 shows an embodiment of the power management system in vehicles with a controlled temperature environment of the present invention, which illustrates the rechargeable electric power storage device (101) being electrically powered by a regenerative braking system (110), by an external power source (103) and by a photovoltaic panel system (100).
Fig. 10 shows an embodiment of the refrigeration apparatus (117) of the present invention.
Fig. 11 shows an embodiment of the rechargeable electric power storage device (101) of the present invention.
Fig. 12 shows an embodiment of the vehicle with a controlled temperature environment of the present invention, which illustrates the refrigeration device (117) associated with the implement's cargo box.
Fig. 13 shows an embodiment of an operating diagram of the controller (104) of the power management system in vehicles with a controlled temperature environment of the present invention.

### Detailed Description of the Invention

The present invention describes a power management system in refrigerated vehicles or refrigerated road implements, which maximizes power efficiency in the transport of refrigerated cargos, wherein the vehicle or refrigerated implement is partially or totally powered by a power source, so that a controller (104) composes an operation model based on georeferencing data (112), and manages the amount of charge that the power supply provides individually to the vehicle and the refrigerator-type implement. In addition, the invention allows maximizing the efficiency of power sources, as the management system has a control logic that considers data that directly or indirectly affects the efficiency of the power sources supplying power to the vehicle and the controlled temperature environment.

In a first object, the present invention shows a power management system in vehicles provided with a temperature-controlled environment, wherein the vehicle and the temperature-controlled environment are powered by at least one power source, which comprises a controller (104) connected to at least one power source and communicating with a georeferencing system (112), which has at least latitude, longitude and altitude data collected in real time and/or previously obtained, wherein the controller (104) defines the amount of charge that the power source individually delivers to the vehicle and temperature-controlled environment based on latitude, longitude, and altitude data.

In one embodiment, the "temperature-controlled environment" comprises a temperature-controlled road implement, such as a refrigerated semi-trailer coupled to a tractor vehicle. In one embodiment, the "vehicle" is a CVC that comprises a tractor vehicle associated with a trailer or semi-trailer, such as a refrigerated truck, which may be of the Electric Vehicle (EV), Hybrid Electric Vehicle (HEV) or Plug-in Hybrid Electric Vehicle (PHEV). For exemplary purposes, without limiting the scope of the invention, one of the power sources is an electric motor or an electric motor inverter that provides full or auxiliary traction to the towing vehicle.

For the purposes of the present invention, the controller (104) is interpreted as a programmable electronic circuit or a set of programmable electronic circuits, where the various functions can be distributed to the different electronic circuits. Within the scope of the present invention, the term controller also encompasses a processor.

Therefore, the controller (104) is provided with an algorithm that is capable of reading data from auxiliary systems (such as the georeferencing system) and applying previously established decision-making logic to define the amount of charge. In this context, "charge" is understood as the physical quantity used by the power source, for example and not limited to: "electrical charge" for electric motors, electric generators, photovoltaic panels, etc.; "fossil fuel charge" for fossil fuel-based components, such as a diesel engine; "chemical charge" for hydrogen cells; in addition to other possible charges for different types of sources. Furthermore, the "amount of charge" refers to the controller (104) enabling the sources to inject more or less charge, and the "amount of charge" may also refer to the binary control of the source, that is, on or off state. Moreover, the controller (104) can combine these different charge quantity settings for the different system sources, with some operating in the "on/off" state and others operating in the "more/less charge" context.

In one embodiment, the georeferencing system (112): i) is fully embedded in the vehicle; or ii) a mixed system, which is composed of a part embedded in the vehicle and a part fixed in a monitoring station.

Thus, the georeferencing system (112) is capable of both collecting latitude, longitude and altitude data in real time and previously obtaining latitude, longitude and altitude data of a desired route for the vehicle route. If this data is obtained in advance, the georeferencing system (112) communicates with an updateable database and is provided with latitude, longitude and route altitude data, this being a predefined route.

In one embodiment, the system comprises a Human-Machine Interface (HMI) that allows the entry/insertion of information and/or data on routes and charge conditions, through the actions of the vehicle/CVC operator.

Based on this data on latitude, longitude, altitude and future weather conditions, the controller (104) is capable of composing a model for the operation and defining the amount of charge, or modes of operation, that the power supply must provide both to the vehicle for the individually controlled temperature environment. In this sense, the vehicle and the temperature-controlled environment may have different energy demands, that is, the vehicle may demand more power than the temperature-controlled environment or vice-versa, so the controller (104) is responsible for checking the parameters and update the model (or redefine the operation methods).

In one embodiment, altitude data refers to data that reflects the variation in altitude at each point or section along the route. In one embodiment, altitude data from the georeferencing system (112) is collected by means of at least one altitude sensor and at least one location sensor, which may or may not be embedded on the vehicle.

In one embodiment, the controller (104) receives altitude data collected in real time through said altitude sensors and location sensors, and processes the altimetry of the route traveled by the vehicle in real time, in each section of the route.

In one embodiment, the controller (104) receives altitude data from an updateable database and/or GPS and composes the altimetry of the route to be traveled, as an initial operating model.

In this way, based on altitude data, the controller (104) is capable of reproducing the terrain relief of the route, that is, it is capable of generating a representation of the altitude variation of each point on the route - altimetry. In this way, the altitude data that generates the altimetry of a route, and these compared with weather conditions and future points on the route, are relevant in moments of decision-making by the controller (104) to direct the charge from the power source to the vehicle and temperature-controlled environment.

For illustration purposes, based on data previously collected on latitude, longitude, altitude and future weather conditions from an updatable database, the controller (104) is able to previously identify the existence of an uphill section on the route and, therefore, define the amount of charge that the power source must provide both to the vehicle in the form of auxiliary traction, and to the temperature-controlled environment, in order to maintain the temperature at a desirable threshold from the supply of charge to the ambient thermal system. In another example, these latitude, longitude and altitude data are also read in real time, serving to complement or update the model initially provided and operated by the controller (104).

In one embodiment, the temperature-controlled environment comprises a temperature control system receiving power from the power source, communicating with the controller (104) and internal temperature sensors that are disposed in the temperature-controlled environment, wherein the controller (104) defines the amount of charge that the power source provides individually to the vehicle and the temperature-controlled environment based in addition on temperature and thermal load data from the temperature control system. In this sense, the controller (104) considers, in addition to latitude, longitude and altitude data, temperature and charge data to compose the model and/or make decisions regarding the amount of charge.

In one embodiment, temperature and heat load data comprise real-time internal temperature data of the temperature-controlled environment and heat load data that the transported cargo can consume, such as the maximum refrigeration temperature at which the cargo can be transported without damaging it.

In this way, the internal temperature sensors that communicate temperature and thermal load data from the temperature-controlled environment to the controller (104) generate an additional real-time internal temperature parameter of the temperature-controlled environment to be included by the controller (104) in the operating model and definition of the amount of charge that the power source must provide both to the vehicle and to the temperature-controlled environment.

In one embodiment, the vehicle power management system comprises a weather monitoring system (113), which provides weather data to the controller (104), wherein the controller (104) sets the amount of charge that the electric power source individually provides the vehicle and temperature-controlled environment based on latitude data, longitude data, altitude data, location data and in addition weather data. Alternatively, in one embodiment, the controller (104) considers internal temperature data and weather data to define the amount of charge that the power source can individually provide to the vehicle and the temperature-controlled environment.

In one embodiment, the weather conditions monitoring system (113) comprises at least one external temperature sensor embedded on the outside of the vehicle and/or in the temperature-controlled environment that sends weather conditions data to the controller (104), such as the temperature of the external environment in real time. In one embodiment, the weather conditions monitoring system (113) comprises at least one weather data server that provides weather forecast data, such as temperature forecast data for a given day and location, as well as weather conditions and luminous incidence or solar irradiance. In one embodiment, the weather conditions monitoring system (113) receives external temperature data from at least one external temperature sensor embedded the vehicle and/or in the temperature-controlled environment, and receives temperature forecast data from a weather data server.

In one embodiment, future weather condition data, i.e., weather condition data in a future route condition is obtained via a mobile data communication network. In one embodiment, future climate condition data comprises, but is not limited to, ambient temperature data, cloud cover level, precipitation level, solar irradiance, etc.

In one embodiment, data on future weather conditions allows mapping of the power charge that is necessary to maintain ideal conditions within the temperature-controlled environment.

By mapping the power charge required in the future, the controller (104) is capable of directing the ideal amount of power to the temperature-controlled environment, maximizing the additional power used in the traction system or regeneration.

In this way, based in addition on the ambient external temperature measured in real time by at least one external temperature sensor, and on temperature forecast data for a given day and location coming from a weather data server, the controller (104) defines the amount of charge that the electric power source provides individually to the vehicle and the temperature-controlled environment.

In one embodiment, the controller (104) considers temperature prediction data and external temperature data to define the amount of charge that the power source can individually provide to the vehicle and the temperature-controlled environment.

Thus, based on the weather conditions data, it is possible for the controller (104) to maximize the efficiency in the operation of power sources that, in some way, depend on weather parameters. For example, if one of the sources is a photovoltaic panel, weather conditions may interfere with the efficiency or use of the panel. With this, the controller (104) can reduce the vehicle's electric power consumption by verifying that at a future point on the route there will be less solar irradiance, in order to have power available when the vehicle passes this future point. In addition, in this example, the controller (104) can verify that at a future point there will be more favorable weather conditions for the solar panel and, therefore, demand more power from the panel at the future point, maximizing the efficiency of the vehicle's sources.

In one embodiment, the controller (104) defines the amount of charge provided by the one or more power sources based on a correlation between latitude, longitude and altitude data versus weather conditions data on said route. In addition, this data can be updated based on future route data and, therefore, the controller (104) can make a new correlation or complement the correlation with future data. With this, the controller (104) can generate a weather vs route relationship, checking the power demands that occur/will occur due to the route and the weather, in addition to checking points for maximizing the efficiency of the sources.

Still in the previous embodiment, the controller (104) can in addition consider data on the vehicle's external temperature correlating external temperature vs weather vs route.

In one embodiment, an initial conditions model is generated by correlating at least historical latitude, longitude and altitude data versus historical/current/future weather condition data. This model of initial conditions is embedded in the controller (104), so that decision-making can be carried out by the controller (104) along the route. The initial conditions model generates power quantity data to be supplied by the controller (104) along part or all of the route to be travelled by the vehicle. With this, the model allows for an initial setup by correlating route data vs weather data, since the route can be previously defined, that is, the model is defined before the vehicle starts traveling along the predefined route.

In one embodiment, said initial conditions model is updated from at least real-time and/or future weather data collected by the weather monitoring system (113). In addition, the model is updated with current and/or future latitude, longitude and altitude data, considering there is some modification to the previously defined route.

In one embodiment, the power source comprises at least one of:
- electric power generator coupled to the vehicle or temperature-controlled environment;
- fossil fuel engine;
- rechargeable electric power storage device (101); or
- electric power generator coupled to the vehicle or to the temperature-controlled environment connected to a rechargeable electric power storage device (101).

In one embodiment, the electric power generator comprises, for example and is not limited to, at least one of: mechanical generator; chemical generator; thermal generator; light generator; wind generator, hydrogen cell-based generator and/or a combination of the above; wherein said electric power generator converts a form of energy into electric power.

In one embodiment, the rechargeable electric power storage device (101) comprises any element capable of storing electric power and operating in charge and discharge functions, that is, being capable of being recharged and operating as a source of electric power. In one embodiment, the rechargeable electric power storage device (101) comprises, for example, at least one battery or at least one ultra-capacitor.

In one embodiment, the power source comprises at least one electric power generator connected with at least one rechargeable electric power storage device (101). In one embodiment, the power source operates with two or more electric power generators and/or with two or more rechargeable electric power storage devices.

In one embodiment, the controller (104) manages the electric power supply capacity of each generator based on the capacity that the controller (104) identifies and each rechargeable electric power storage device (101).

In one embodiment, the vehicle power management system comprises a charge monitoring system of the rechargeable electric power storage device (101), wherein the charge monitoring system provides charge data from said rechargeable device (101) to the controller (104), wherein the controller (104) defines the amount of charge that the electric power source provides individually to the vehicle and the temperature-controlled environment based in addition on the charge data of the rechargeable electric power storage device (101).

In one embodiment, the charge data comprises the SoC (State of Charge) of the rechargeable electric power storage device (101). In addition, in one embodiment, the charge data comprises the SoH (State of Health) of the rechargeable electric power storage device (101).

In this way, the charge monitoring system sends charge data to the controller (104), which generates an additional parameter to be included by the controller (104) in the operation model and definition of the amount of charge that the power source must provide both to the vehicle in the temperature-controlled environment.

In one embodiment, the vehicle power management system comprises a vehicle dynamics monitoring system (111) capable of reading operational data and checking vehicle parameters that may impact power management, wherein the controller (104) defines the amount of charge that the power source must individually provide to the vehicle and the temperature-controlled environment based in addition on the verified operational data and vehicle parameters, where the operational data and vehicle parameters comprise, for example:
- vehicle/cargo vehicle combination mass;
- embedded power (CVC + auxiliary traction system);
- center of gravity of the cargo vehicle combination;
- turning and contour radii;
- aerodynamic coefficients
- number of shafts; and/or
- future charge forecast.

In one embodiment, the vehicle power management system comprises a motor/inverter monitoring system capable of checking motor/inverter operating parameters that may impact power management, wherein the controller (104) defines the amount of charge that the power source must individually provide to the vehicle and the temperature-controlled environment based in addition on the motor/inverter operating parameters, wherein said motor/inverter operating parameters comprise, for example:
- operating current levels;
- operating voltage levels;
- operating torque and power levels;
- operating temperatures;
- engine rotation;
- motor coupling status; and/or
- operating status of the inverter.

In a second object, the present invention shows a method of power management in a vehicle provided with a temperature-controlled environment, wherein the vehicle and the temperature-controlled environment are powered by at least one power source, the method comprising defining an amount of charge that the power source provides individually to the vehicle and the temperature-controlled environment, this step being carried out by a controller (104) that is connected to the power source and communicating with a georeferencing system (112), which has at least latitude, longitude and altitude data collected in real time and/or previously obtained, wherein the controller (104) defines the amount of charge based on the latitude, longitude and altitude data.

In one embodiment, the controller (104) receives the altitude, latitude and longitude data collected in real time, performs the altimetry processing step of the route traveled by the vehicle in real time, in each section of the route and composes an operation model.

In one embodiment, the controller (104) receives altitude data from an updateable database and/or GPS, processes the altimetry of a route to be traveled and composes an operation model.

In one embodiment, the step of defining the amount of power consumed by the temperature-controlled environment comprises the receipt by the controller (104) of temperature and charge data from a temperature control system comprised in the temperature-controlled environment, wherein the controller (104) sets the amount of charge based in addition on temperature and charge data.

In one embodiment, the temperature and thermal load data comprises real-time internal temperature data from the temperature-controlled environment, in addition to current ambient temperature data and temperatures in future driving conditions, and thermal load data that the transported cargo can consume, wherein the controller (104) receives the temperature and thermal load data and composes a model for defining the amount of charge that the power source provides individually to the vehicle and the temperature-controlled environment.

In one embodiment, the step of defining the quantity of charge comprises the receipt by the controller (104) of weather data from a weather monitoring system (113), wherein the controller (104) defines the amount of charge based in addition on data on current and/or future weather conditions.

In one embodiment, the controller (104) receives data on weather conditions, such as the temperature of the external environment in real time, and future predictions, through at least one external temperature sensor embedded on the outside of the vehicle and/or in the controlled temperature environment, in addition to the mobile data communication network to obtain data on future weather predictions.

In one embodiment, the controller (104) receives weather data, such as temperature forecast data for a given day and location through at least one weather data server.

In this way, the controller (104) receives the weather conditions data and composes a model for defining the amount of charge based in addition on the weather conditions data, which the power source can provide individually to the vehicle and the temperature-controlled environment.

In the charge amount definition step, the controller (104) in one embodiment is provided with an initial conditions model, said initial conditions model being composed from a correlation between, at least, latitude data, longitude and altitude versus weather data; wherein said model generates data on the amount of electric power to be supplied by the controller (104) along part or all of the route that is previously defined. This model, as previously indicated, is composed before the vehicle starts traveling along the pre-defined route.

In addition, the method of the present invention has a step of predefining the initial conditions model. At this step, the model is composed of at least historical latitude, longitude and altitude data and weather conditions for a given route. Therefore, this data is correlated in order to have an estimate of the best operation of the vehicle's power sources. In one embodiment, historical data is collected through the circulation of the vehicles themselves, which collect operational and operating data from power sources to feed a base where the model is generated.

In one embodiment, the power source comprises at least one rechargeable electric power storage device (101), where the step of defining the amount of charge comprises receiving by the controller (104) charge data from the rechargeable electric power storage device (101), wherein the controller defines the amount of charge based in addition on the charging data of the rechargeable electric power storage device (101).

In one embodiment, the charge data comprises the SoC of the rechargeable electric power storage device (101). In addition, in one embodiment, the charge data comprises additional information, but not limited to these, such as SoH (State of Health), CCL (Charge Current Limit), DCL (Discharge Current Limit), Cell Temperature, among others, of the rechargeable electric power storage device (101).

In this way, the controller (104) receives charge data and generates an additional parameter to be included in the operating model and definition of the amount of charge that the power source must provide both to the vehicle and to the temperature-controlled environment. This operating model can be composed of the initial conditions model together with any real-time data updates.

In one embodiment, the vehicle power management method of the present invention further comprises a step of pre-defining the amount of charge based on latitude, longitude and altitude data previously obtained during a route pre-definition, wherein the controller (104) defines an initial condition model for the amount of charge relative to the predefined route. In one embodiment, with the route pre-established, time estimates for completing the route are calculated, which are crossed with the weather conditions data obtained for each of the points on the route in question.

In one embodiment, the controller (104) previously defines the best times to increase or decrease the amount of charge that the power source provides individually to the vehicle and the temperature-controlled environment. For illustration purposes, in a previously identified descent situation, the controller (104) based on this pre-definition foresees increasing the charge supplied to the temperature-controlled environment, and thus foresees a decrease in the amount of load supplied to the vehicle. Likewise, in a previously identified ascent situation, the controller (104) predicts a decrease in the amount of charge supplied to the temperature-controlled environment and predicts an increase in the amount of charge supplied to the vehicle.

In one embodiment, in situations of prior identification of an uphill section at a given point or section of the route, for example the controller (104) first directs the power source charge to cool the temperature-controlled environment at a temperature below a cold storage temperature threshold of the charge, so that the temperature in the temperature-controlled environment is maintained within this temperature threshold during the ascent on the uphill section, so that the power source charge is directed in its entirety or for the most part for use as auxiliary torque to help with ascent the slope.

In this way, the controller (104) identifies the altitude of the uphill section based on altitude data and location data, identifies the length and distance of the section based on latitude and longitude data, and directs the amount of charge necessary to control the temperature-controlled environment within the pre-established temperature threshold, configuring a type of "thermal battery", that is said environment "stores" thermal load, in which the temperature is maintained within the cold storage range of the charge during the momentary interruption total or partial of directing the charge from the power source to the temperature-controlled environment, and the controller (104) directs the charge to be used as auxiliary torque in an uphill situation.

In addition, in one embodiment the operating model and definition of the amount of charge that the power source must provide both to the vehicle and to the temperature-controlled environment is initially defined, and can be changed along the route based on the data read in real time, such as altitude data and temperature and charge data.

In addition, in one embodiment the operating model and definition of the amount of charge that the power source must provide both to the vehicle and to the temperature-controlled environment is also fed based on weather data, which provides temperature prediction data and temperature data from the external environment in real time, so that the controller (104) can improve this model by knowing the weather forecast for that day, region, time, etc.

It is also an object of the present invention to be a thermal load management system in a temperature-controlled vehicular environment, the vehicular environment being provided with a thermal system powered by at least one power source, which comprises a controller (104) connected to the power source, and communicating with a georeferencing system (112), which has at least latitude, longitude and altitude data collected in real time and/or previously obtained, in which the controller (104) defines the amount of charge that the power source provides to the temperature-controlled vehicle environment based on latitude, longitude and altitude data.

In one embodiment, the "temperature-controlled vehicle environment" comprises a temperature-controlled road implement, such as a refrigerated semi-trailer coupled to a tractor vehicle.

In one embodiment, the georeferencing system (112) is capable of both collecting latitude, longitude and altitude data in real time and previously obtaining latitude, longitude and altitude data of a desired route for the vehicle's route. If this data is obtained in advance, the georeferencing system (112) communicates with an updateable database and is provided with latitude, longitude and route altitude data, this being a predefined route.

In one embodiment, based on this latitude, longitude and altitude data, the controller (104) composes a model to define the amount of charge that the power source must provide to the temperature-controlled vehicle environment.

In one embodiment, the controller (104) receives altitude data collected in real time through at least one altitude sensor and at least one location sensor, and processes the altimetry of the route to be traveled in real time, in each section of the route.

In one embodiment, the controller (104) receives altitude data from an updateable database and/or GPS and composes the altimetry of the route to be traveled.

In one embodiment, the temperature-controlled environment comprises a temperature control system and internal temperature sensors disposed within the vehicle environment, wherein the controller (104) defines the amount of charge that the power source provides to the vehicular environment based on additionally internal temperature and charge data from the temperature control system. In this sense, the controller (104) considers in addition to latitude, longitude and altitude data, internal temperature and charge data to compose the model and/or make decisions regarding the amount of charge.

In one embodiment, internal temperature and charge data comprise real-time internal temperature data of the temperature-controlled vehicle environment and thermal load data that the transported cargo may consume.

In this way, the internal temperature sensors that communicate internal temperature and charge data from the temperature-controlled vehicle environment to the controller generate an additional real-time internal temperature parameter of the vehicle environment to be included by the controller (104) in the operating model and definition of the amount of charge that the power source must provide to the temperature-controlled vehicle environment.

In one embodiment, the thermal load management system in a temperature-controlled vehicle environment additionally comprises:
- a weather conditions monitoring system (113), which provides data on current and future weather conditions to the controller; wherein the controller (104) defines the amount of charge that the power source provides and the vehicle environment based additionally on weather conditions data; and
- a charge monitoring system of a rechargeable electric power storage device (101), which is included in the power source; wherein the controller (104) defines the amount of charge that the power source provides to the vehicular environment based additionally on charge data generated by the monitoring system.

In one embodiment, the weather conditions monitoring system (113) comprises at least one external temperature sensor that sends weather conditions data, such as the temperature of the external environment, to the controller (104) in real time.

In one embodiment, the weather monitoring system (113) comprises at least one weather data server that provides weather data, such as temperature forecast data for a given day and location to the controller.

In this way, based additionally on the external temperature measured in real time and on temperature forecast data for a given day and location from a climate data server, the controller (104) defines the amount of charge that the power source electrically provides the vehicular temperature-controlled environment individually.

In one embodiment, charge data generated in the charge monitoring system of a rechargeable electric power storage device (101) comprises the SoC of the rechargeable electric power storage device (101). Additionally, in one embodiment the charge data comprises the parameters SoH (State of Health), CCL (Charge Current Limit), DCL (Discharge Current Limit), Cell Temperature, among others of the rechargeable electric power storage device.

In this way, the charge monitoring system sends charge data to the controller, which generates an additional parameter to be included by the controller in the model for defining the amount of charge that the power source must provide to the temperature-controlled vehicle environment.

It is also an object of the invention, a method of managing thermal load in a temperature-controlled vehicle environment, with the vehicle environment being provided with a thermal system powered by at least one power source, the method comprising a step of defining the amount of load that the power source provides to the vehicular environment, this step being carried out by a controller (104) that is connected to the power source and communicating with a georeferencing system (112), which has at least latitude, longitude and altitude data collected in real-time and/or previously obtained, wherein the controller defines the amount of load based on latitude, longitude and altitude data.

In one embodiment, the stage of defining the amount of charge comprises the step in which the controller (104) receives the altitude, latitude and longitude data collected in real time, and performs a step of processing the altimetry of the route to be traveled in real time, on each part of the route. In one embodiment, the controller (104) receives altitude data from an updateable database and/or GPS and composes the altimetry of a route to be traveled.

Thus, in the step of defining the amount of charge that the power source provides to the temperature-controlled vehicle environment, the controller (104) receives latitude, longitude and altitude data and composes an operation model.

In one embodiment, the method of managing thermal load in a temperature-controlled vehicular environment additionally comprises a step of pre-defining the amount of charge based on data on the load to be transported, internal and external temperatures of the temperature-controlled environment, future route weather conditions, as well as latitude, longitude and altitude data previously obtained during a route pre-definition, wherein the controller (104) defines an initial condition model for the amount of charge in relation to the pre-defined route.

In one embodiment, the controller (104) previously defines the best times to increase or decrease the amount of charge that the power source provides to the temperature-controlled vehicle environment.

In one embodiment, in situations of identifying a section of slope at a given point or section of the route, for example, the controller (104) directs the amount of charge required from the power source to control the temperature-controlled vehicle environment within a pre-established temperature threshold, configuring a type of "thermal battery", that is said vehicle environment "stores" thermal load, wherein the temperature is maintained within the charge cold storage range during total or partial momentary interruption direction of the charge from the power source to the temperature-controlled vehicle environment, and the controller (104) directs the load to be used as auxiliary torque in an uphill situation.

In another object, the present invention shows a cargo vehicle combination provided with a temperature-controlled environment, wherein the cargo vehicle combination comprises at least a first power source and a second power source and is equipped with a power management system, where the power management system comprises a controller (104) communicating with power supplies, a georeferencing system (112) and a weather conditions monitoring system (113), wherein: the georeferencing system (112) has at least latitude, longitude and altitude data for at least one route collected in real time and/or previously obtained; the weather monitoring system (113) provides historical, real-time or future weather condition data; the controller (104) defines the amount of electrical charge provided by the power sources through a correlation between latitude, longitude and altitude data versus weather conditions data of said route to be traveled by the cargo vehicle combination; and the controller (104) is provided with a previously defined initial conditions model, the initial conditions model being composed from a correlation between, at least, latitude, longitude and altitude data versus climatic conditions data, in which said model is optimized for said route to be covered by the cargo vehicle combination.

In this context, the initial conditions model is optimized based on the pre-defined route that will be followed by the vehicle. This optimization occurs based on the correlation between latitude, longitude and altitude data versus climatic conditions data for the respective route, in addition to identifying the types of the first and second power sources. Therefore, the model is optimized considering the route vs the weather vs the types of source, in order to maximize the efficiency and/or power use of the sources, since route and weather data directly influence the operation of the sources.

In one embodiment, the optimized model is capable of providing the best route option for moving from a starting point to a selected destination. This best route option is based on a correlation between at least historical altimetry data vs weather vs CVC power source types.

In one embodiment, the power source comprises at least one of:
- power generator coupled to the vehicle;
- fossil fuel engine;
- rechargeable power storage device (101); or
- power generator coupled to the vehicle connected to a rechargeable power storage device (101).

In one embodiment, the rechargeable power storage device (101) comprises any element capable of storing power and operating in charge and discharge functions. In one embodiment, the rechargeable power storage device (101) comprises, for example, at least one battery or at least one ultra-capacitor.

In one embodiment, the temperature-controlled environment CVC comprises a plurality of electric power generators connected to the rechargeable power storage device (101), wherein the electric power generator comprises at least one of:
- shaft with regenerative traction system (110);
- photovoltaic panel (100);
- wind generator;
- thermal generator;
- chemical generator; and/or
- mechanical generator.

In one embodiment, the vehicle with a controlled temperature environment comprises a system of photovoltaic panels (100) associated on the external part of the cargo box of the controlled temperature environment, which generates electric power through a power generator coupled to the vehicle and /or powers the rechargeable power storage device (101).

In one embodiment, the photovoltaic panel system (100) comprises sending photovoltaic solar energy generation data to the controller (104), wherein the controller (104) composes a model for defining the amount of charge that the power source must provide a controlled temperature environment based on additionally photovoltaic solar energy generation data.

In this sense, the application of the photovoltaic panel system (100) results in several advantages for the vehicle with a temperature environment and for the transport operation, such as a significant reduction in fuel consumption, in addition to managing the charge of the rechargeable electric power storage device (101), providing intelligent power consumption.

Based on this, for illustration purposes, the CVC can be equipped with a system of photovoltaic panels, a battery pack and a shaft with a regenerative system and auxiliary traction - as three power sources. In this example, the model optimized for a given route correlates weather data, which can directly affect the operation of the photovoltaic panel, with altimetry data, which can affect the operation of the auxiliary drive shaft.

### Example 1 - Power management system in a refrigerator-type vehicle

The examples shown herein are intended only to exemplify one of the numberless ways of carrying out the invention, however without limiting its scope thereof.

The present invention developed in this example comprises a power management system in a refrigerated vehicle, such as a refrigerated truck or a refrigerated semi-trailer.

Said developed system has a controller (104) connected to a power source - battery (101) and/or an electric generator -, where the vehicle and the refrigerated cargo box are electrically supplied in an auxiliary and individual way by the power source, where the power source provides auxiliary power for cooling the cargo box, as already applied in US2008174174, and provides auxiliary traction to the vehicle in times of demand - hilly situations. In the present invention, the controller (104) defines the amount of charge or the operating modes that the power source individually provides to the vehicle and the refrigerated cargo box along each segment of a route traveled by the set based on data from georeferencing (112) previously acquired, and composes a predictive and updateable model (with real-time data) in order to maximize power efficiency in the transport of temperature-controlled cargo.

In addition, the batteries (101) of the developed system are fed through a regenerative braking system (110) associated with the CVC, which captures the power dissipated during braking from the CVC set and stores it in the batteries, and fed through a system of photovoltaic panels (100) connected to the upper external part of the charging box, which capture solar energy and store it in the batteries. Furthermore, the batteries (101) of the developed system can be powered through an external power source (103), where the refrigerator-type vehicle can be parked and connected to a battery recharging station to recharge the system's batteries and to keep the cargo cool.

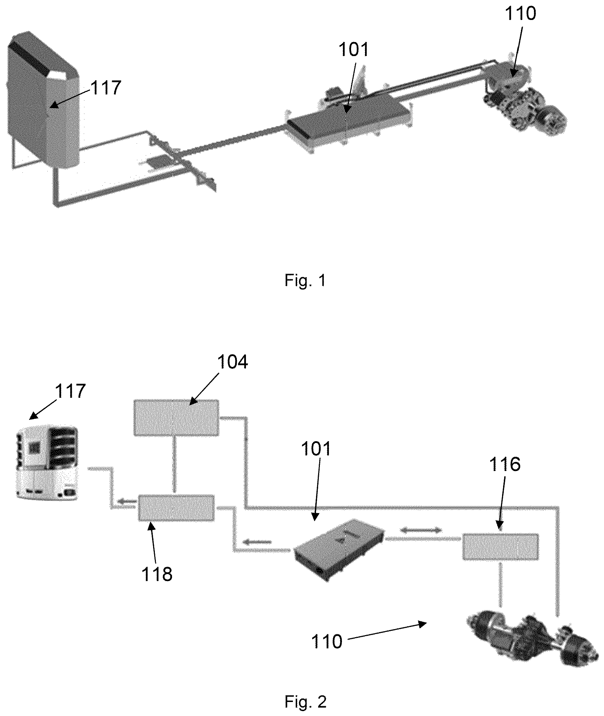

Figs. 1 and 2 show an example of the power management system, where the batteries (101) are powered by the regenerative braking system (110), wherein the inverter (116) converts the power coming from the regenerative braking system (110) for storage in the batteries (101) and the controller (104) controls the supply of power stored in the batteries (101) to the refrigeration device (117), where a second inverter (118) is responsible for converting the direct current coming from the batteries (101) for alternating current and supply power to the refrigeration apparatus (117). The diagram in figure 2 also shows the different connection buses between the components, being alternating voltage, direct voltage and data bus lines.

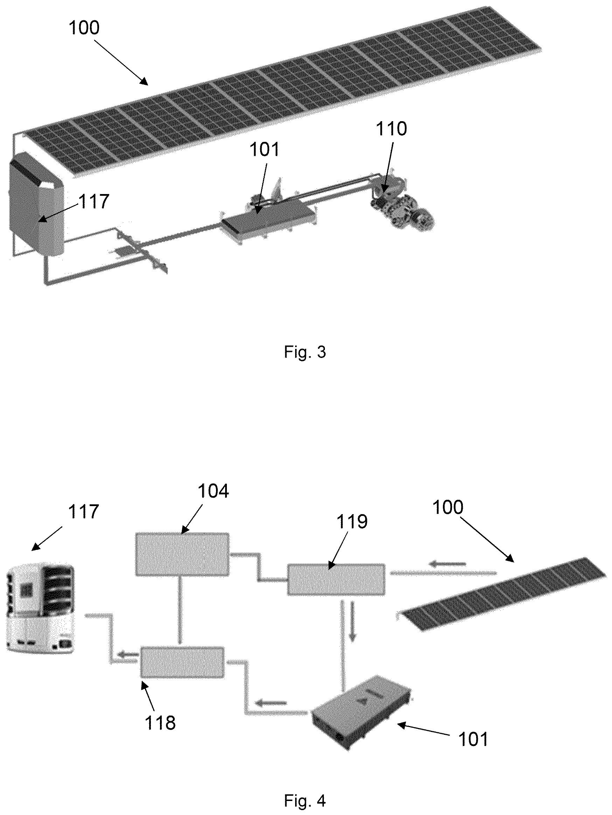

Fig. 3 shows an example of the power management system, where the batteries (101) are powered by the regenerative braking system (110) and a photovoltaic panel system (100).

Fig. 4 shows a diagram of an example of the power management system, wherein the batteries (101) are powered by a photovoltaic panel system (100), which has its own solar energy controller (119) interacting with the controller (104), wherein the controller (104) controls the power supply to the refrigeration apparatus (117).

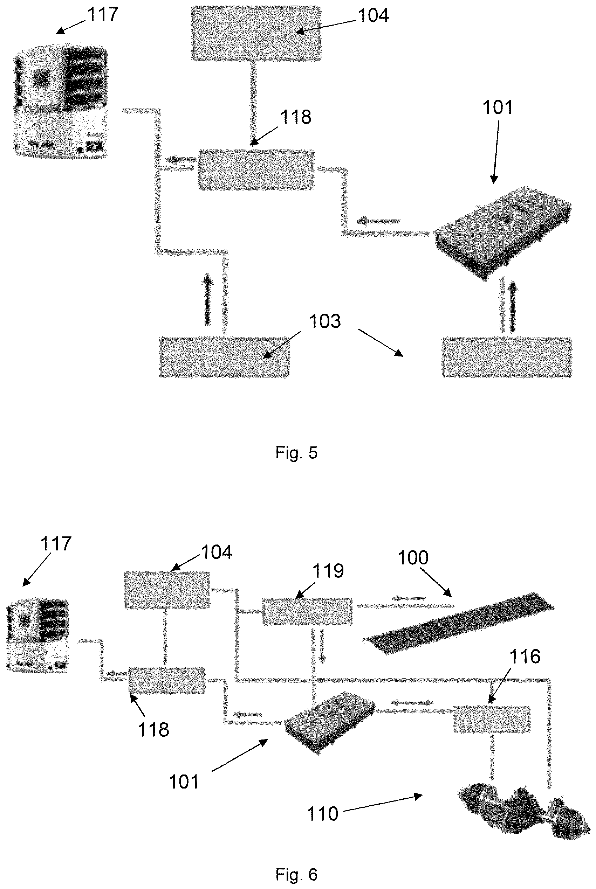

Fig. 5 shows a diagram of an example of the power management system, wherein the batteries (101) are powered by an external power source (103), wherein the controller (104) controls the direction of the power coming from the external power source (103) to the batteries (101) or to the refrigeration device (117). In this example, the refrigeration device (117) can also have an external power source (103) that is individual and independent of the source that powers the batteries (101).

Fig. 6 shows a diagram of an example of the power management system, wherein the batteries (101) are powered by a photovoltaic panel system (100) and by a regenerative braking system (110), wherein the inverter (116) converts the power coming from the regenerative braking system (110) and this power is stored in the batteries (101), and the controller (104) controls the direction of the power coming from the photovoltaic panel system (100) and the regenerative braking system (110) for the batteries (101) or the refrigeration device (117).

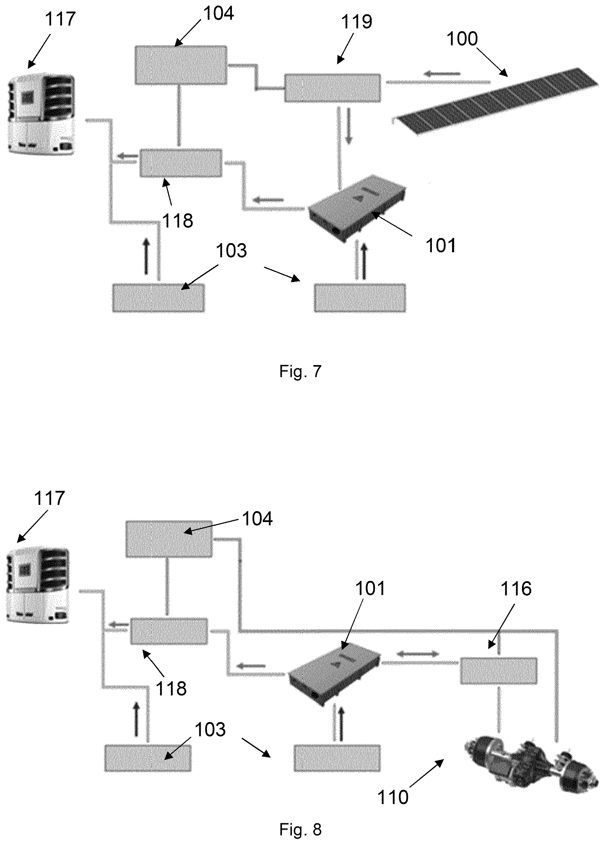

Fig. 7 shows a diagram of an exemplification of the power management system, wherein the batteries (101) are powered by a system of photovoltaic panels (100) and by an external power source (103), wherein the controller (104) directs the power from the external power source (103) and/or the photovoltaic panel system (100) to the batteries (101) and/or the refrigeration device (117). In this example, the refrigeration apparatus (117) is also powered by an external power source (103) independent of the source that powers the batteries (101).

Fig. 8 shows a diagram of an exemplification of the power management system, wherein the batteries (101) are powered by a regenerative braking system (110) and by an external power source (103), wherein the inverter (116 ) converts the power from the regenerative braking system (110) and the controller (104) directs the power from the external power source (103) and the regenerative braking system (110) to the batteries (101) and/or to the refrigeration device (117).

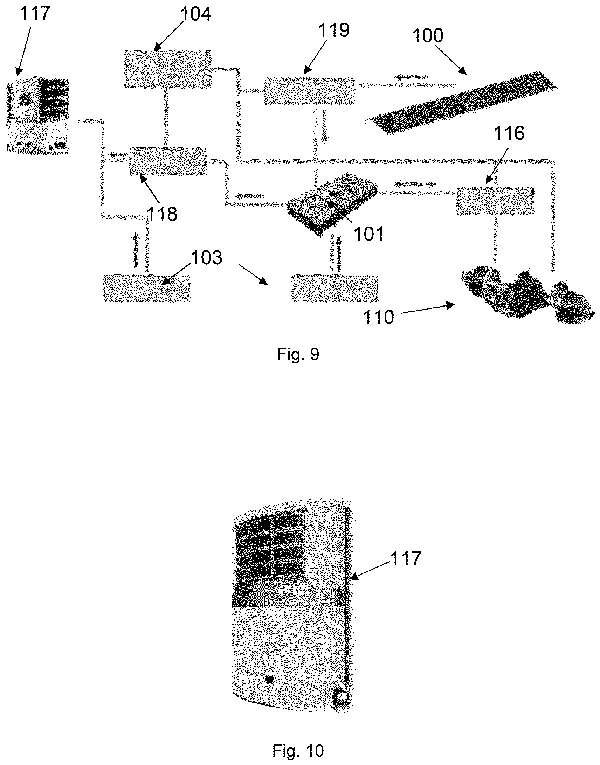

Fig. 9 shows a diagram of an example of the power management system, wherein the batteries (101) are powered by a photovoltaic panel system (100) by an external power source (103) and by a regenerative braking system. (110), wherein the controller (104) controls the direction of power from the photovoltaic panel system (100), the external power source (103) and the regenerative braking system (110) to the batteries (101) and /or to the refrigeration device (117).

In this way, as illustrated in Figs. 6 to 9, the developed power management system allows structural modularity and can be assembled in different operational configurations with different power sources - regenerative braking system (110), external power source (103 ) and/or photovoltaic panel system (100) -, allowing customization of the power management system according to demand. In addition, said system comprises an electrical-electronic and structural configuration adapted for coupling or not the photovoltaic panel system (100) and the regenerative braking system (110). Furthermore, the controller (104) of the power management system is preconfigured to recognize, process and control the photovoltaic panel system (100), the regenerative braking system (110) and/or the external power source (103) once connected.

The georeferencing system (112) developed collects latitude, longitude and altitude data in real time and/or obtains latitude, longitude and altitude data in advance from an updateable database from a desired route for the vehicle route.

Based on this latitude, longitude and altitude data, the controller (104) composes an operating model and defines the amount of charge that the power source provides to the vehicle and the refrigerated cargo box individually.

In addition, with regard to altitude data, the controller (104) receives it collected in real time through altitude sensors and location sensors, and processes the altimetry of the route traveled by the vehicle in real time, in each section of the route. The controller (104) can also receive altitude data from an updateable database and/or GPS to generate the altimetry of the route to be traveled.

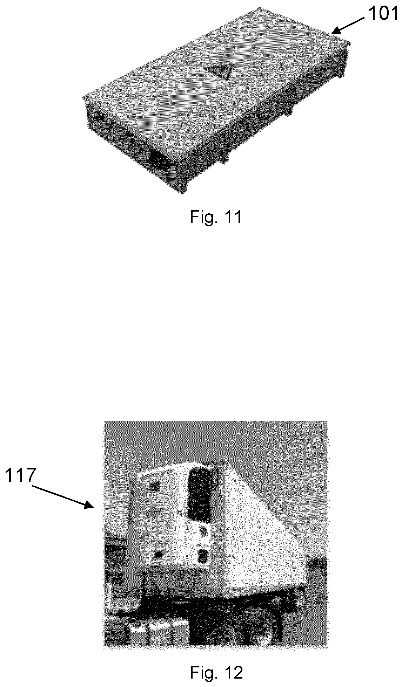

Thus, the controller (104) developed in this example is an intelligent optimization algorithm, whose function is to maximize the availability of electric power, both for present moments and for future CVC operating situations. In this way, the use of the electric power source for the cargo refrigeration and auxiliary traction subsystems of the semi-trailer is maximized. Fig. 10 illustrates the refrigeration device (117) and figure 12 shows the refrigeration device (117) coupled to the cargo box.

The application of the system developed in this example results in different advantages for the operator, such as: reduction in fossil fuel consumption for the operation of the refrigerated cargo box and the refrigeration device (117) (in cases of combustion devices), reduction in electric power consumption of the refrigeration device (117) (hybrid and electric devices), reduction of fuel consumption of the vehicle/tractor vehicle (through an auxiliary traction system).

Therefore, by significantly reducing the consumption of fossil fuel in cargo refrigeration applications, as well as during the running of refrigerated trucks and semi-trailers, the present invention developed in this example is considered a green and ecofriendly technology.

Thus, the power management system in refrigerator-type vehicles developed in this example comprises an optimization algorithm - controller (104) - which has the function of maximizing efficiency in the use of electric power and integrating information from the following subsystems:
- weather and environmental conditions (113);
- georeferencing (112);
- vehicle dynamics (111);
- photovoltaic system (100);
- battery pack (101);
- motor and inverter (110) (powertrain).

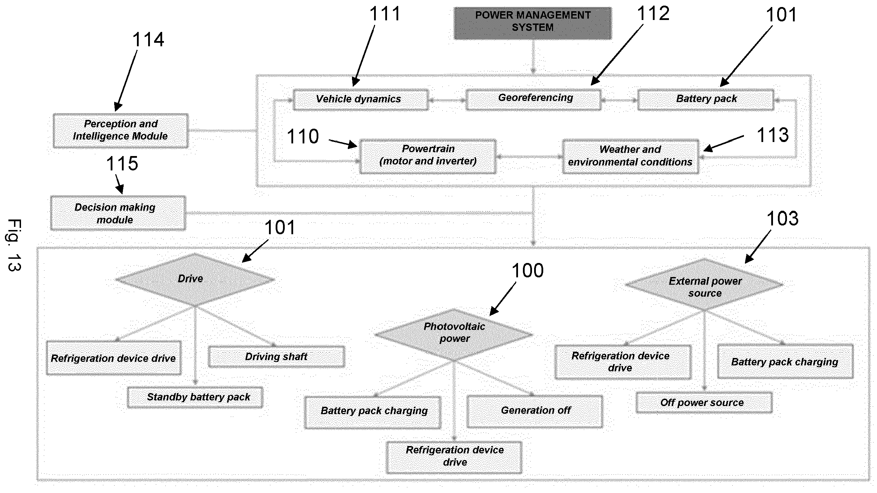

Fig. 13 shows a schematic of the operation of the controller (104) of the power management system developed in this example. In this example, the controller (104) is provided with modules, which are interpreted by software components or artifacts, being the perception and intelligence module (114) and the decision-making module (115).

In the aforementioned schematization of figure 13, the power management system comprises the perception and intelligence module (114) that receives and reads data from the vehicle dynamics subsystems (111), georeferencing (112), battery pack (101) and weather and environmental conditions (113). In addition, based on parameters from these subsystems the decision-making module (115) of the controller (104) controls the direction of the charge from the power source(s) to the vehicle and the temperature-controlled environment (cool box), wherein the power sources comprise batteries (101), a photovoltaic power system (100) and/or an external power source (103).

In this example, the controller (104) through the decision-making module (115) defines the amount of charge through operating modes that said power supplies must provide to the CVC. In this case, the amount of charge is defined by selecting a drive from said source directed to a specific component, directing the charge to the batteries (101) or stand-by mode - with the sources not supplying charges.

In addition, as illustrated in figure 13, the batteries (101) have three modes of operation/actuation: activation of the refrigeration device (117), which directs the charge of the batteries (101) to control the temperature in the refrigerated box; activating the auxiliary traction shaft, which directs the charge from the batteries (101) to be used as auxiliary traction in times of vehicle demand; and stand-by battery, which keeps the batteries (101) in a stand-by mode.

Furthermore, as illustrated in figure 13, the photovoltaic panel system (100) has three operating/action modes: charging the battery pack (101), where the power generated by the photovoltaic panels (100) is stored in the batteries (101); activating the refrigeration device (117), where the power generated by the photovoltaic panels (100) is directed to the refrigeration device (117) to control the temperature in the cold box; and off generation where there is no power generation by photovoltaic panels (100).

In addition, as illustrated in figure 13, the external power source (103) has three modes of operation/actuation: activating the refrigeration device (117), where the power from the external power source (103) is directed to the device refrigeration system (117) to control the temperature in the cold box; charging the battery pack, wherein the power from the external power source (103) is directed to charging the batteries (101); and off power source, where the batteries (101) are not charged by the external power source (103).

The objective function of the controller is obtained by considering different variables of the power management system. Each of the monitored variables is responsible for one or more operating conditions, generating mathematical models for predicting power generation with definition of powertrain power and torque levels and route prediction maps (time, speed, future conditions, etc.). The details of the application of each of the information in the monitored subsystems, as well as their function within the controller, are detailed in the subsequent items.

### Weather and environmental conditions:

Weather and environmental conditions refer to the information used to calculate the power required to cool the cargo and the amount of solar energy available for regeneration. In addition, weather conditions are used to define the best operating conditions for photovoltaic panels, given that weather change (change in temperature, solar irradiance, etc.) impacts the efficiency/utilization of the solar panel.

In addition to data monitored in real time, the connection to the data network allows the anticipation of future weather conditions through weather data from sensors positioned on the outside of the vehicle and/or the cargo box according to the route to be taken, in order to adjust the operating mode during application.

In this way, the controller generates mathematical models, which can predict the power generation conditions, as well as adjust the refrigeration system in order to anticipate thermal variations and solar incidence present in the operation.

In addition to weather conditions, environmental traffic information is used to cross-reference information, in order to obtain route execution times, possible stops on highways and their impact (consumption, photovoltaic power generation), arrival forecast and different points on the route with the respective impacts of solar incidence, ambient temperature, etc.

The main data on climatic and environmental conditions used in the data crossing processes are listed, but not limited, by the following list:
- room temperature (momentary and future en-route);
- humidity (momentary and future en-route);
- atmospheric pressure (momentary and future en-route);
- level of solar radiation (momentary and future en-route);
- level of cloudiness (momentary and future en-route);
- precipitation level (momentary and future en-route);
- wind speed (momentary and future en-route);
- wind direction (momentary and future en-route);
- internal temperatures of the cold box;
- cargo limit temperatures;
- level of road traffic (current and future en-route);
- highway speed limits.

### Georeferencing:

A georeferencing system (112) communicating with a controller and at least one power source was developed, where the georeferencing system (112) is used to define operating parameters during the routes to be traveled and calculate performance for transposition of ups and downs.

The main georeferencing data (112) used in data crossing processes are listed, but not limited, by the following list:
- altitude (momentary and future en-route);
- latitude (momentary and future en-route);
- longitude (momentary and future en-route).

Based on this information, mathematical models are generated by the controller with the power levels capable of regeneration during slopes and estimated power levels for assistance on slopes.

The mathematical models of traction and regeneration, crossed with information from the other monitored subsystems, allow the definition of the optimal moments for the actuation of the auxiliary traction/regeneration system (110) (powertrain).

### Vehicle dynamics parameters:

Different parameters related to the vehicle dynamics (111) of the combination were mapped, in order to simulate the vehicle's performance on the route. The main information regarding vehicle dynamics data (111) used in data crossing processes is listed, but not limited, by the following list:
- vehicle/combination mass (CVC);
- embedded power (vehicle/truck + auxiliary traction system);
- center of gravity of the combination;
- turning and contour radii;
- aerodynamic coefficients;
- quantity of shafts;
- future charge forecast.

The mathematical models, crossed with georeferencing information (112), and the powertrain curves (110) of the auxiliary traction system, generate maps of en-route speeds, calculations of departure and arrival times at different reference points.

### Photovoltaic system:

This subsystem monitors photovoltaic solar energy generation data, crossing the theoretical efficiency data of the photovoltaic modules, arranged on the external part of the load box and/or on the towing vehicle, level of momentary and future solar radiation, as well as data weather and environmental conditions (temperature and wind speed).

In this crossing of information, the power generation prediction function is obtained, which is used to survey the power potential available along the route.

The main photovoltaic solar energy generation data referring to the parameters of the photovoltaic system (100) used in the data crossing processes are listed, but not limited, by the following list:
- module efficiency (100);
- instantaneous power generation level;
- average power generation level;
- module voltage (100);
- module current (100);
- module power (100).

The information on the potential photovoltaic power available en-route is used in the base objective function, which is responsible for optimizing power between all subsystems (refrigeration device (117), battery (101) and powertrain (110)).

In case of prediction of spare power to the storage capacity of the batteries, the power management system, through the controller, is capable of prioritizing consumption in refrigeration situations, or auxiliary traction, in order to predict availability for power capture.

### Batteries:

The power source developed in this example comprises a battery pack (101) used as a means of power storage, wherein the batteries (101) are monitored with respect to accumulated power, battery charge and discharge levels, available power, temperature and other performance parameters. Fig. 11 shows an example of the battery (101) used in the power management system.

The main information regarding the parameters of the battery pack (101) used is listed, but not limited, by the following list:
- Voltage level - VDC;
- State of Charge - SoC;
- Charge and Discharge current limit - CCL e DCL;
- power available - kWh;
- operation temperature;
- module voltage;
- module current;
- battery pack power.

The information from the battery pack (101) is used to generate power use optimization models, and these models are generated also considering the CVC application routes and the photovoltaic solar energy generation prediction function.

In conditions of low power availability in the batteries (101), the operation of the refrigeration system and the generation of photovoltaic solar energy are prioritized. In opposite situations, where there is high power availability, the auxiliary traction mode is activated more frequently, in order to reduce the consumption of the vehicle/tractor vehicle.

### Motor e inverter:

This motor and inverter subsystem monitors the operating parameters and availability of the motor and inverter, in order to guarantee the operation of the photovoltaic panel system (100) at the necessary times.

The main information regarding motor and inverter parameters is listed, but not limited, by the following list:
- operating current levels;
- operating voltage levels;
- operating torque and power levels;
- operating temperatures;
- engine rotation;
- motor coupling status;
- operating status of the inverter.

These motor and inverter parameters are used to define the best entry and exit points of the powertrain system (110), as well as the best conditions for the generation of photovoltaic power by the photovoltaic panel system (100).

### VCU - Vehicle Control Unit

The VCU is responsible for receiving all mapped information during the operation of the power management system and under future conditions. Furthermore, the VCU is integrated with all hardware and is responsible for processing the intelligent optimization algorithm - controller - and sending commands to all subsystems.

### Example 2 - Method of operation of the power management system in a refrigerator-type Vehicle

The operating method of the power management system developed in this example comprises defining the amount of charge to be supplied by the power source to the vehicle and the refrigerated cargo box individually, this definition being carried out by the power management system controller based on various data and parameters from the towing vehicle, the refrigerated cargo box and the external environment, generating a mathematical model of the power source operation.

The parameters that make up the operating model and definition of the amount of charge generated by the controller are mainly latitude, longitude and altitude data, referring to the route to be covered by the vehicle, and additionally temperature and charge data, coming from the box refrigerant charge, weather data collected from the external environment, and charge data collected from the rechargeable electric power storage device (101).

In addition, in this example, a composition step is carried out by the controller of an initial condition model for the amount of charge in relation to the pre-defined route to be traveled by the vehicle, where the controller composes the model based on latitude, longitude and altitude data previously obtained during a route pre-definition. In this way, based on this initial condition model, the controller predicts the best moments to increase or decrease the amount of charge supplied to the towing vehicle and the refrigerated cargo box individually on the route, according to the uphill and downhill conditions of the pre-determined route defined. More specifically, the controller is capable of reading altimetric data of the route, from the altitude data, and, therefore, previously identifying the uphill and downhill sections of the route to be traveled. In this sense, the initial model is composed with this pre-definition that in the descent sections the controller directs more electric power to the refrigerated cargo box than to the vehicle (even being able to reset the electrical charge/ auxiliary traction supply to the vehicle). On uphill sections, the controller directs more electric power to the vehicle, in the form of auxiliary traction, than to the refrigerated cargo box (respecting, however, condition parameters of the box's internal temperature, established based on the load transported).

Furthermore, based on this initial model of the amount of charge in relation to the pre-defined route, this model can be updated along the route covered by the CVC according to the conditions of each section of the route.

The update of the initial condition model of the amount of charge is made by the controller based on parameters collected during the route traveled, where the collected parameters include: longitude, latitude and altitude data of the route traveled, which generate the altimetry of the route; weather conditions data, such as external environmental temperature collected in real time and/or weather forecast for a specific region/day/time collected from a database; battery charge data collected in real time, such as SoC and SoH; temperature and load data collected in real time, such as the internal temperature of the refrigerated cargo box and the thermal load that the transported cargo can consume; operational data and vehicle dynamics parameters (111), such as CVC mass, quantity of shafts, future load forecast, embedded power (CVC + auxiliary traction system); and/or motor/inverter parameters collected during operation, such as operating current, voltage and torque levels, inverter operating state, motor coupling state, etc.

In addition, in this example, the controller is provided with a "thermal battery" mode of operation.

In this mode of operation, in situations where an uphill section is identified at a certain point along the route, the controller first directs the charge from the power source to cool the refrigerated cargo box at a temperature below the charge cold storage temperature range, so that the temperature in the refrigerated cargo box is maintained within the charge storage temperature range during the ascent on the uphill section, so that the power source charge is fully directed to use as auxiliary torque to aid the ascent of the uphill section.

Thus, the controller identifies the altitude of the uphill section based on the collected altitude data identifies the length and distance of the section, based on latitude and longitude data, and directs the amount of charge necessary to control the temperature of the refrigerated cargo box at a temperature below the cargo cold storage temperature, generating a kind of "thermal battery" in the refrigerated cargo box, that is, the cargo box "stores" thermal load, and the temperature is maintained within the charge storage temperature range during the momentary interruption of directing the charge from the power source to the refrigerated cargo box. Likewise, the controller directs the charge to be used as auxiliary torque when going uphill.

### Example 3 - Power Management in CVC Refrigerator with initial conditions model

Within the scope of the concept of the invention, when considering a CVC with three power sources, being a regenerative auxiliary traction shaft (110), a battery pack (101) and a photovoltaic panel (100), a model of conditions was defined initial information for the operation of the system and be embedded in the controller (104).

When defining a route to transport cargo, the model receives historical/current longitude, latitude and altitude data from that route with historical, current and/or future climate data from the same route. With this, the data is correlated with the aim of verifying an altimetric profile vs a weather profile of the route. Thus, with the result of the model, the controller (104) is capable of checking uphill/downhill sections, which impact the operation of the auxiliary drive shaft, and solar irradiance and temperature data, which impact the operation of the photovoltaic panel. This model is then optimized for this respective route and embedded in the controller (104) as an initial setup. In this way, before the route is started, the controller (104) already has the operations that will be carried out when the CVC travels this respective route. As the CVC advances along the route, the controller (104) reads the georeferencing system (112) and the weather conditions monitoring system (113) to verify the need to update the data and, consequently, the operations necessary to seek the best power use of the photovoltaic panel and the auxiliary drive shaft.

From this, for example, when an uphill section is observed with good solar irradiance, the controller (104) can activate the CVC auxiliary traction and maintain a supply for the refrigerator's refrigeration system or charging the battery pack (101), given that the photovoltaic panel is in good operating condition.

### Defining the initial conditions model

In this example, as one of the ways to obtain the initial conditions model, a relationship was used between altimetry data, meteorological forecast data together with historical solar irradiance data in the region of operation (or route) over a time horizon. defined, in order to obtain an estimate of irradiance during the route and, consequently, of power generation by the solar system. For this model, a regression system based on a supervised learning method was used, where this result is used to define the mode of operation of the traction system and the cooling system to optimize fuel consumption.

To collect the data, both data from specific weather and route/altimetry databases were used, as well as data collected from the circulation of the CVCs themselves. CVCs can be equipped with memories that store data from the georeferencing system (112) and weather conditions system (113) together with operational data from the auxiliary drive shaft and the photovoltaic panel.

### Optimization of the initial conditions model for route definition

In addition, this initial conditions model can be optimized for route specification, based on the CVC power sources. In this example, based on the correlation of the elevation profile vs weather data of some routes and considering the presence of the auxiliary drive shaft + photovoltaic panel, the model is optimized to calculate the power profile of a given route. Therefore, before starting a journey, it is possible to check the possible routes to travel to the final point and, therefore, energetically compare the possible routes. With this, the model can suggest a route that is more energetically optimized for the type of sources that are embedded the CVC (in this case, auxiliary drive shaft and photovoltaic panel).

Those skilled in the art will value the knowledge disclosed herein and will be able to reproduce the invention in the presented embodiments and in other variants and alternatives covered by the scope of the following claims.

## Claims

1. Power management system in a vehicle provided with a temperature-controlled environment wherein the vehicle and the temperature-controlled environment are powered by at least one power source, **characterized in that** it comprises a controller (104) connected to at least one power source and communicating to a georeferencing system (112), which has at least latitude, longitude and altitude data of for at least one route collected in real time and/or previously obtained, wherein the controller (104) defines the amount of charge that the power source individually delivers to the vehicle and temperature-controlled environment based on the latitude, longitude, and altitude data.

2. Power management system in a vehicle, according to claim 1, **characterized in that** it comprises a weather conditions monitoring system (113), which provides weather conditions data to the controller (104), wherein the controller (104) defines the amount of charge that the power source individually delivers to the vehicle and temperature-controlled environment based in addition on weather data.

3. Power management system in a vehicle, according to claim 2, **characterized in that** the controller (104) defines the amount of charge provided by the power source through a correlation between latitude, longitude and altitude data versus weather data of said route.

4. Power management system in a vehicle, according to claim 3, **characterized in that** the correlation between latitude, longitude and altitude data versus weather conditions data is carried out based on future latitude, longitude and altitude data and weather conditions of said route.

5. Power management system in a vehicle, according to claim 2, **characterized in that** the controller (104) defines the amount of charge supplied by the power source through a previously defined initial conditions model, wherein said initial condition model is composed from a correlation between at least latitude, longitude and altitude data versus weather conditions data, with said model generating data on the amount of electric power to be supplied by the controller (104) over part or the entire route that is previously defined.

6. Power management system in a vehicle, according to claim 5, **characterized in that** the initial conditions model is defined before the vehicle starts said route and is updated based on at least weather data collected in real time and/or futures data through the weather conditions monitoring system (113).

7. Power management system in a vehicle, according to claim 1, **characterized in that** the power source is defined by at least one of:
a. electric power generator coupled to the vehicle or temperature-controlled environment;
b. rechargeable electric power storage device (101); or
c. electric power generator coupled to the vehicle or temperature-controlled environment connected to a rechargeable electric power storage device (101).

8. Method of power management in a vehicle provided with a temperature-controlled environment wherein the vehicle and the temperature-controlled environment are powered by at least one power source, **characterized in that** it comprises:
- definition of the amount of charge that the power source provides individually to the vehicle and the temperature-controlled environment, this step being carried out by a controller (104) that is connected to the power source and communicating with a georeferencing system (112), which has at least latitude, longitude and altitude data of at least one route collected in real time and/or previously obtained,
wherein the controller (104) defines the amount of charge based on the latitude, longitude and altitude data.

9. Method of power management in a vehicle, according to claim 8, **characterized in that** the step of defining the amount of charge comprises: the receipt by the controller (104) of weather conditions data from a weather conditions monitoring system (113) wherein the controller (104) defines the amount of charge based in addition on weather data.

10. Method of power management in a vehicle, according to claim 9, **characterized in that** the step of defining the amount of charge comprises a step of correlating latitude, longitude and altitude data versus weather conditions data of said route, this correlation being carried out based on real-time and/or future data on latitude, longitude and altitude and weather conditions of that route.

11. Method of power management in a vehicle, according to claim 9, **characterized in that** the step of defining the amount of charge is carried out prior to the start of the route by the vehicle, wherein the controller (104) is provided with a model of initial conditions, with said initial conditions model being composed from a correlation between at least latitude, longitude and altitude data versus weather conditions data; wherein said model generates data on the amount of electric power to be supplied by the controller (104) along part or entire route that is previously defined.

12. Vehicle power management method, according to claim 11, **characterized in that** the initial conditions model is defined before the vehicle starts said route and is updated based on at least weather data collected in real time and/or future data through the weather conditions monitoring system (113).

13. Cargo vehicle combination, wherein the cargo vehicle combination comprises at least a first power source and a second power source and is equipped with a power management system, **characterized in that** the power management system comprises a controller (104) communicating with such power sources, a georeferencing system (112) and a weather conditions monitoring system (113), wherein:
- the georeferencing system (112) has at least latitude, longitude and altitude data for at least one route collected in real time and/or previously obtained;
- the weather monitoring system (113) provides historical, real-time or future weather condition data;
- the controller (104) defines the amount of electrical charge provided by the power sources through a correlation between latitude, longitude and altitude data versus weather conditions data of a said route to be traveled by the cargo vehicle combination;
- the controller (104) is provided with a previously defined initial conditions model, the initial conditions model being composed from a correlation between at least latitude, longitude and altitude data versus weather conditions data, wherein said model is optimized for the said route to be traveled by the cargo vehicle combination.

14. Cargo vehicle combination, according to claim 13, **characterized in that** the power sources are defined by at least one of:
a. at least one power generator coupled to the vehicle;
b. rechargeable power storage device (101); or
c. at least one power generator coupled to the vehicle connected to a rechargeable power storage device (101).

15. Cargo vehicle combination, according to claim 14, **characterized in that** it comprises a plurality of electric power generators connected to the rechargeable power storage device (101), wherein the electric power generator is defined by at least one of:
- shaft with traction regenerative system (110);
- photovoltaic panel (100);
- wind generator;
- thermal generator;
- chemical generator; and/or
- mechanical generator.

16. Thermal load management system in a temperature-controlled vehicular environment, the vehicular environment being provided with a thermal system powered by at least one power source, **characterized in that** it comprises a controller (104) connected to the power source and communicating with a georeferencing system (112) which has at least latitude, longitude and altitude data collected in real time and/or previously obtained, wherein the controller (104) defines the amount of charge that the power source provides to the temperature-controlled vehicular environment based on the latitude, longitude and altitude data.
